# EUROPÄISCHE PATENTANMELDUNG

(11) **EP 4 851 054 A1**
(43) Veröffentlichungstag der Anmeldung: **09.12.2026**
(21) Anmeldenummer: 25180245.0
(22) Anmeldetag: 02.06.2025
(51) Int. Cl.: B65B 3/00, B65G 54/02, F24F 3/167

(54) **PHARMAZEUTISCHE VERARBEITUNGSVORRICHTUNG UND KORRESPONDIERENDES VERFAHREN**

(71) Anmelder: TT Innovation AG, 6343 Rotkreuz (CH)
(72) Erfinder:
(74) Vertreter: Mertzlufft-Paufler, Cornelius

(57) **Zusammenfassung**

Bei einer pharmazeutischen Verarbeitungsanlage (1) wird erfindungsgemäß vorgeschlagen, wenigstens eine Luftaustrittsöffnung (5) einer kontrollierten Umgebung (2) in einem Abschnitt (9) einer Begrenzungswand (8) so auszurichten und anzuordnen, dass der Abschnitt (9) transversal zu einer Hauptströmungsrichtung (7), die in der kontrollierten Umgebung (2) herrscht, ausgerichtet ist

## Beschreibung

Die Erfindung betrifft eine pharmazeutische Verarbeitungsvorrichtung, mit einer kontrollierten Umgebung, in der wenigstens eine Transportvorrichtung ausgebildet ist, die wenigstens eine magnetisch angetrieben, vorzugsweise levitiert, bewegliche Transporteinheit hat, wobei die kontrollierte Umgebung wenigstens eine Luftaustrittsöffnung aufweist, wobei eine Luftströmung in der kontrollierten Umgebung eine Hauptströmungsrichtung definiert.

Die Erfindung betrifft weiter ein Verfahren zum Betrieb einer pharmazeutischen Verarbeitungsvorrichtung, insbesondere unter Verwendung einer pharmazeutischen Verarbeitungsvorrichtung nach einem der vorangehenden Ansprüche, wobei wenigstens eine Transporteinheit in einer kontrollierten Umgebung an wenigstens einer Antriebsfläche magnetisch angetrieben, vorzugsweise levitiert, bewegt wird, wobei die wenigstens eine Transporteinheit wenigstens einen pharmazeutischen Behälter transportiert.

Pharmazeutische Verarbeitungsvorrichtungen sind für eine Ausführung unterschiedlicher pharmazeutischer Prozesse, beispielsweise einem Befüllen oder Umfüllen und/oder Verschließen von pharmazeutischen Präparaten und/oder ein Herstellen von, insbesondere personalisierbaren, Wirkstoffen und/oder Biopharmaka, und/oder einer Montage von pharmazeutischen Geräten zur Applikation, wie einem Injektor, einer Spritze, einem Inhaler, einer Pumpe, und/oder zur Messung, wie beispielsweise einem On Body Dispensing System oder einem On Body Diagnosis System, also insbesondere eine körpergetragene Medikamentengabe- und/oder Messvorrichtung, bekannt. Die Handhabung erfolgt in der Regel unter definierten Umgebungsbedingungen in Bezug auf Luftzusammensetzung und/oder Schutz weitere entfernt liegender Bereiche, wie sie beispielsweise durch kontrollierte Umgebungen in an sich bekannter Weise realisierbar sind.

Eine kontrollierte Umgebung kann beispielsweise als ein begrenzter Raumbereich charakterisierbar sein, in welchem definierte Umgebungsbedingungen, insbesondere in Bezug auf eine Luftreinheit und/oder eine Oberflächenreinheit, schaffbar und/oder aufrecht erhaltbar sind, beispielsweise durch eine Kontrolle eines Luftaustausches mit einer Außenwelt der kontrollierten Umgebung. Die Kontrolle des Luftaustausches kann beispielsweise durch einen völligen Ausschluss des Luftaustausches im Normalbetrieb (beispielsweise bis auf eine geschlossene Luftzirkulation) oder eine konsequente Vorgabe einer Richtung des Luftaustausches (in die kontrollierte Umgebung oder aus der kontrollierten Umgebung) realisiert sein. Beispiele kontrollierter Umgebungen umfassen Isolatoren, Restricted Access Barrier Systems (zugangsbeschränkte Barrierensysteme, insbesondere vom offenen oder geschlossenen Typ), Containments, Gloveboxes. Innerhalb der kontrollierten Umgebung, insbesondere des Containments oder des Isolators, können somit verschiedene Prozesse zur Verarbeitung verschiedenster Erzeugnisse, beispielsweise pharmazeutischer Erzeugnisse, erfolgen, wobei die Gefahr einer Kontamination wenigstens eines Erzeugnisses durch Partikel und/oder Verunreinigungen von außerhalb und/oder nach außerhalb der kontrollierten Umgebung dezimiert werden kann. Solche pharmazeutischen Erzeugnisse können beispielsweise jeweils einen pharmazeutischen Behälter zu einer Aufnahme eines pharmazeutischen Präparats aufweisen. Eine Liste von Beispielen solcher pharmazeutischen Behälter umfasst zumindest Vials, Spritzen, Karpulen (Zylinderampullen) und sonstige befüllbare pharmazeutische Behälter.

Ein weiteres Merkmal einer kontrollierten Umgebung ist, dass die Luft gereinigt eingebracht wird, dies kann über Filter, insbesondere Schwebstofffilter (HEPA-Filter - High Efficiency Particulate Air filter) gewährleistet werden, welche beispielsweise in Isolatoren möglichst großflächig das obere Ende einer kontrollierten Umgebung bilden können.

Magnetisch angetriebene Transportvorrichtungen sind bekannt beispielsweise als schienengeführte oder spurgeführte Transportsystem oder - insbesondere im Fall von magnetisch levitierten Transporteinheiten, als Linear- oder Planarmotoren, bei dem ein vorzugsweise stationärer Magnetfelderzeuger, insbesondere mit Spulen und/oder beweglichen Permanentmagneten, ein gesteuertes Magnetfeld entwickelt, welches die Transporteinheit(en) anheben und gezielt bewegen kann. Planarmotoren als spezielle magnetisch levitiert angetriebene Transportvorrichtungen sind beispielsweise bekannt aus dem Eintrag zum Stichwort "Planarmotor" der deutschsprachigen Wikipedia, https://de.wikipedia.org/wiki/Planarmotor.

Der Erfindung liegt die Aufgabe zugrunde, die Gebrauchseigenschaften von vorzugsweise industriell einsetzbaren, kontrollierten Umgebungen zu verbessern.

Zur Lösung der genannten Aufgabe sind erfindungsgemäß die Merkmale des Anspruchs 1 vorgesehen. Insbesondere wird somit zur Lösung der genannten Aufgabe bei einer pharmazeutischen Verarbeitungsvorrichtung der eingangs beschriebenen Art erfindungsgemäß vorgeschlagen, dass die wenigstens eine Luftaustrittsöffnung in einem transversal zu der Hauptströmungsrichtung ausgerichteten Abschnitt einer Begrenzungswand ausgebildet ist. Somit ist eine gleichmäßigere und/oder störungsärmere Luftströmung in der kontrollierten Umgebung erreichbar. Es ist bekannt, Luftströmungen, beispielsweise laminare Strömungen oder definiert verwirbelte Luftströmungen in einer kontrollierten Umgebung zu etablieren, um beispielsweise bestimmte Bereiche der kontrollierten Umgebung zu schaffen, in denen ein Partikelübertrag aus anderen Bereichen praktisch ausgeschlossen ist. Dies kann beispielsweise erreicht werden, indem die Luftströmung so eingerichtet wird, dass sich eine Hauptströmungsrichtung ergibt, die beispielsweise als ein mathematisches Mittel über alle lokalen (ggf. normierten) Geschwindigkeitsvektoren der Luftströmung charakterisierbar sein kann. Ein Partikelübertrag entgegen der Hauptströmungsrichtung ist dann verminderbar oder sogar ganz ausschließbar.

Eine Luftaustrittsöffnung kann beispielsweise als eine Öffnung in einer Einhausung beschreibbar sein, durch welche Luft die kontrollierte Umgebung in einem Normalbetrieb verlässt. Eine Lufteintrittsöffnung kann beispielsweise als eine Öffnung in einer Einhausung beschreibbar sein, durch welche Luft die kontrollierte Umgebung in einem Normalbetrieb betritt. Eine Lufteintrittsöffnung kann beispielsweise zusätzliche Filter, insbesondere Schwebstofffilter, Laminarisatoren und/oder Sterilluftverteiler, auch CG-Verteiler genannt, und/oder Luftleitmittel wie Leitbleche aufweisen. Eine Luftaustrittsöffnung kann beispielsweise Ventilklappen oder Verschlussmittel zu einem gasdichten Verschluss aufweisen und/oder Filter, insbesondere Schwebstofffilter.

Eine Lufteintrittsöffnung oder eine Luftaustrittsöffnung werden im Sinne dieser Anmeldung auch dann als Teil einer Begrenzungswand beschrieben, wenn sie die jeweilige Begrenzungswand vollständig ausfüllen. in typischer Anwendungsfall kann sein, dass eine Begrenzungswand, insbesondere eine Decke, vollständig oder nahezu vollständig in Segmente unterteilt ist, die jeweils eine Lufteintrittsöffnung mit zugehörigem Rahmen aufweisen. Weiter ist oftmals unterhalb der Lufteintrittsöffnung noch eine Membrane und/oder ein weiterer Filter und/oder Differenzdruckerzeuger ausgebildet.

Die Erfindung ermöglicht es, mögliche Turbulenzen, die sich aus einer Aufteilung der Luftströmung an einer transversalen Begrenzungswand, bedingt durch eine bisher übliche Anordnung der Luftaustrittsöffnungen an seitlichen, längs der Hauptströmungsrichtung ausgerichteten Begrenzungswänden, ergibt. Diese seitliche, in der Regel vertikale Ausrichtung der Luftaustrittsöffnungen wurde bisher häufig gewählt, wenn eine Luftzirkulation vollständig in einem Oberteil einer Einhausung der kontrollierten Umgebung ausgebildet wird und die kontrollierte Umgebung nach unten durch eine Bodenplatte, die Innenaufbauten der pharmazeutischen Verarbeitungsvorrichtung trägt, verschlossen wird.

Die Hauptströmungsrichtung ist in vielen Fällen vertikal oder zumindest überwiegend vertikal nach unten ausgerichtet. Somit muss die Luftströmung nicht einer Einwirkung einer Gravitationskraft entgegenwirken.

Die genannte (transversal zur Hauptströmungsrichtung ausgerichtete) Begrenzungswand kann beispielsweise in einem Winkel zwischen 45° und 135°, insbesondere in einem Winkel von 90° oder senkrecht, zu der Hauptströmungsrichtung ausgerichtet sein.

Die Begrenzungswand kann eben ausgebildet sein oder selbst ein Profil aufwiesen.

Bei einer vorteilhaften Ausgestaltung kann vorgesehen sein, dass eine Antriebsfläche der Transportvorrichtung transversal, insbesondere in einem Winkel zwischen 45° und 135° oder senkrecht, oder längs zu der Hauptströmungsrichtung ausgerichtet ist.

Bei einer vorteilhaften Ausgestaltung kann vorgesehen sein, dass die Begrenzungswand einen Boden der kontrollierten Umgebung bildet.

Bei einer vorteilhaften Ausgestaltung kann vorgesehen sein, dass wenigstens eine Lufteintrittsöffnung in einer der Begrenzungswand gegenüber liegenden weiteren Begrenzungswand, ausgebildet ist. Dies ermöglicht auf einfache Weise eine Ausbildung einer gerichteten, bevorzugt einen Querschnitt transversal zur Hauptströmungsrichtung ausfüllenden, Luftströmung in der kontrollierten Umgebung.

Günstig ist es, wenn diese weitere Begrenzungswand eine Decke der kontrollierten Umgebung ist. Dies ermöglicht es, eine Wirkung der Luftströmung durch eine Wirkung einer Gravitationskraft zu ergänzen oder zu verstärken.

Es kann vorgesehen sein, dass die wenigstens eine Luftaustrittsöffnung zumindest teilweise unterhalb der Antriebsfläche angeordnet ist. Dies kann zu einer Unterstützung eines Abströmens der Luftströmung von der Antriebsfläche nutzbar gemacht werden. Beispielsweise kann die Luftaustrittsöffnung in einem von 90° verschiedenen Winkel zur Hauptströmungsrichtung angeordnet sein, was eine Anordnung teilweise oberhalb und teilweise unterhalb (in Bezug auf die Hauptströmungsrichtung und/oder die Gravitation) der Antriebsfläche erlauben würde.

Bei einer Ausgestaltung der Erfindung von möglicherweise eigenständiger Bedeutung kann bei einer pharmazeutischen Verarbeitungsvorrichtung vorgesehen sein, dass die Luftaustrittsöffnung nicht transversal, sondern parallel zu der Hauptströmungsrichtung ausgerichtet ist und teilweise unterhalb der Antriebsfläche und/oder zumindest teilweise unterhalb einer Schnittstelle in einer Einhausung der kontrollierten Umgebung angeordnet ist.

Eine Ausrichtung einer Öffnung im Sinne dieser Beschreibung kann beispielsweise als Ausrichtung einer Ebene, die die Öffnung begrenzt oder aufnimmt, charakterisierbar sein. Eine transversale Ausrichtung zur Hauptströmungsrichtung kann daher beispielsweise dadurch charakterisierbar sein, dass die Hauptströmungsrichtung mit einer Flächennormale der genannten Ebene einen mehr oder weniger spitzen Winkel einnimmt. Bevorzugt ist dieser Winkel kleiner als 45°. Eine parallele Ausrichtung zur Hauptströmungsrichtung kann beispielsweise dadurch charakterisierbar sein, dass der Winkel 90° beträgt.

Die Antriebsfläche kann beispielsweise als Abdeckung oder Abschluss des bereits erwähnten Magnetfelderzeugers charakterisierbar sein, auf der sich die Transporteinheiten in einem oder mehr als einem Freiheitsgrad durch eine Wirkung oder Ansteuerung eines erzeugten Magnetfeldes bewegen lassen. Bei entsprechend komplexen Transportvorrichtungen sind hier auch Hubbewegungen auf die Antriebsfläche zu oder von ihr weg ausführbar.

Die Antriebsfläche kann beispielsweise durch den Wirkbereich der Magnetfelderzeuger definiert sein.

In einer vorteilhaften Ausgestaltung kann vorgesehen sein, dass die Antriebsfläche räumlich von der Transporteinheit getrennt ist, insbesondere durch eine Trennschicht, und/oder dass die Antriebsfläche chemisch beständig ausgebildet ist und/oder gegenüber der kontrollierten Umgebung abgedichtet ist. Weiter kann eine Antriebsfläche vorteilhafterweise aus mehreren Magnetfelderzeugermodulen bestehen, welche zu der Antriebsfläche zusammengefasst sind.

Bei einer vorteilhaften Ausgestaltung kann vorgesehen sein, dass wenigstens eine Luftaustrittsöffnung zumindest teilweise in einem Strömungsschatten der Antriebsfläche angeordnet ist und/oder dass die wenigstens eine Luftaustrittsöffnung zumindest teilweise direkt anströmbar ist. Dadurch kann/können vorteilhaft eine Luftaustrittsöffnung und/oder nachfolgende Filtereinheiten platzsparend verbaut werden.

Bei einer vorteilhaften Ausgestaltung kann vorgesehen sein, dass die wenigstens eine Luftaustrittsöffnung zumindest teilweise, insbesondere an wenigstens zwei, an wenigstens drei oder an vier Randabschnitten, von der Antriebsfläche eingefasst ist. Dadurch kann vorteilhaft eine Luftaustrittsöffnung zwischen einer, insbesondere großflächigen, Antriebsfläche platziert werden und/oder die Luftströmung positiv beeinflusst werden und/oder die Konstruktion platzsparend und/oder kostengünstig ausgeführt werden. Bei einer vorteilhaften Ausgestaltung kann vorgesehen sein, dass die wenigstens eine Luftaustrittsöffnung vollständig von der Antriebsfläche eingefasst ist. Somit ist eine allseitige Zugänglichkeit der Luftaustrittsöffnung für die Transporteinheiten erreichbar.

Bei einer vorteilhaften Ausgestaltung kann vorgesehen sein, dass die wenigstens eine Luftaustrittsöffnung in Bezug auf die Hauptströmungsrichtung, zumindest teilweise, stromaufwärts und/oder, stromabwärts und/oder auf einer Höhe der Antriebsfläche angeordnet ist.

Bevorzugt ist die wenigstens eine Luftaustrittsöffnung auf gleicher Höhe oder tiefer als die Antriebsfläche angeordnet. Somit sind Störungen einer Luftströmung nahe der Antriebsfläche vermeidbar.

In einer Variante ist die wenigstens eine Luftaustrittsöffnung höher als die Antriebsfläche angeordnet. Somit ist ein Eindringen von Reinigungsfluid bei einem Reinigen der Antriebsfläche vermeidbar. Ebenfalls kann die Luftaustrittsöffnung durch eine leichte Überhöhung vor dem Eindringen von Flüssigkeiten geschützt werden.

Die wenigstens eine Luftaustrittsöffnung kann auch schräg ausgerichtet sein, dann kann sie im (schrägen) Boden verlaufen. Der Boden kann auch Stufen haben.

Die wenigstens eine Luftaustrittsöffnung kann auch weitere Bereiche aufweisen, die nicht transversal zu der Hauptströmungsrichtung ausgerichtet sind, beispielsweise indem die Luftaustrittsöffnung einen Knick bildet. Bevorzugt sind die Luftaustrittsöffnungen jedoch eben ausgebildet, beispielsweise um ein einfaches Verschließen zu ermöglichen.

Bei einer vorteilhaften Ausgestaltung kann vorgesehen sein, dass die wenigstens eine Luftaustrittsöffnung und wenigstens eine Lufteintrittsöffnung durch wenigstens eine Verbindungsgerade verbindbar sind, die durch die Antriebsfläche verläuft. Somit kann die wenigstens eine Luftaustrittsöffnung zumindest teilweise in einem Strömungshalbschatten der Antriebsfläche ausgebildet sein. Dies ermöglicht eine zusätzliche Reduktion einer erforderlichen Standfläche der pharmazeutischen Verarbeitungsvorrichtung. Ein Strömungshalbschatten kann beispielsweise dadurch charakterisierbar sein, dass jeder Punkt des Strömungshalbschattens sowohl mit einem Punkt der wenigstens einen Lufteintrittsöffnung mit einer durch die Antriebsfläche verlaufenden Gerade als auch mit einem weiteren Punkt der wenigstens einen Lufteintrittsöffnung mit einer an der Antriebsfläche vorbeilaufenden Gerade verbindbar ist. Die wenigstens eine Luftaustrittsöffnung kann hierbei zumindest teilweise, bevorzugt vollständig, in einem Strömungskernschatten der Antriebsfläche angeordnet sein. Dies ermöglicht eine Anordnung der wenigstens einen Luftaustrittsöffnung ohne eigenen Platzbedarf in der Standfläche. Ein Strömungshalbschatten kann beispielsweise dadurch charakterisierbar sein, dass für jeden Punkt des Strömungskernschattens jede zu einem beliebigen Punkt der wenigstens einen Lufteintrittsöffnung verlaufende Gerade durch die Antriebsfläche verläuft.

Bei einer vorteilhaften Ausgestaltung kann vorgesehen sein, dass die wenigstens eine Luftaustrittsöffnung über (wenigstens) zwei Strömungswege, die zwischen sich die Antriebsfläche aufnehmen und/oder beidseits der Antriebsfläche verlaufen, mit der wenigstens einen Lufteintrittsöffnung verbunden ist.

Es ist so ein Umspülen der Antriebsfläche erreichbar, was für eine Reduzierung von Strömungsstörungen förderlich sein kann.

Insbesondere können hierbei die zwei Strömungswege einen gemeinsamen Startpunkt und/oder einen gemeinsamen Endpunkt aufweisen. Somit ist eine breite Abdeckung der kontrollierten Umgebung mit einer geringen Anzahl von Lufteintritts- und/oder Luftaustrittsöffnungen erreichbar. Ebenfalls kann ein zu verarbeitendes Produkt möglichst zentral in einer kontrollierten Umgebung gehandhabt werden, wodurch Störeinflüsse durch Begrenzungswände und/oder Prozessstationen vermindert insbesondere vermieden werden können.

Es kann auch vorgesehen sein, dass die zwei Strömungswege beabstandete Startpunkte aufweisen.

Alternativ oder zusätzlich kann vorgesehen sein, dass die zwei Strömungswege beabstandete Endpunkte aufweisen. Somit sind Strömungsführungen mit mehreren Luftaustrittsöffnungen verwendbar.

Alternativ oder zusätzlich kann vorgesehen sein, dass alle Strömungswege zwischen der wenigstens einen Lufteintrittsöffnung und der wenigstens einen Luftaustrittsöffnung an einer seitlichen Begrenzung der Antriebsfläche an dieser vorbeilaufen. Somit sind Anwendungen, bei dem ein Strömungsraum durch die Antriebsfläche einseitig begrenzt ist, realisierbar.

Die erwähnten zwei Strömungswege sind hierbei exemplarisch zu verstehen. In der Regel weist eine kontrollierte Umgebung eine (unendlich) große Anzahl von Strömungswegen auf, die sich aber häufig anhand der exemplarischen Strömungswege gruppieren lassen.

Die erwähnten unterschiedlichen Start- und/oder Endpunkte können beispielsweise durch voneinander beabstandete Öffnungen definiert sein.

Die Antriebsfläche kann für eine Luftströmung eine Verengung bilden, beispielsweise eine einseitige Verengung mit einer (einfach) zusammenhängenden Antriebsfläche, oder eine zwei- oder mehrseitige Verengung durch eine mehrteilige oder gelochte oder mittige Antriebsfläche.

Bei einer vorteilhaften Ausgestaltung kann vorgesehen sein, dass wenigstens ein Strömungsweg nach einem Verlassen der Luftaustrittsöffnung ein mit der wenigstens einen Transporteinheit transportierbares Transportgut, nach einem Verlassen der Luftaustrittsöffnung, insbesondere eines der Luftaustrittsöffnung zugeordneten Schwebstofffilters, trifft. Somit ist auf einfache Weise ein first-air-Prinzip realisierbar, bei welchem auf das Transportgut treffende Luft vorher keine Oberflächen kontaktiert hat, an denen eine Verunreinigung erfolgen könnte.

Die Luftaustrittsöffnung kann hierbei beispielsweise einen zugeordneten Schwebstofffilter aufweisen. Ein Schwebstofffilter kann beispielsweise für eine Homogenisierung eines Geschwindigkeitsprofils und/oder eine Laminarisierung, eine Verteilung und/oder eine Beruhigung der Luftströmung eingesetzt werden. Alternativ kann durch eine möglichst großflächige Ausbildung, insbesondere vollflächige und/oder nahezu vollflächige Ausbildung, des Schwebstofffilters, die gewünschte Luftströmung, insbesondere Verteilung, erreicht werden.

Besonders günstig ist es, wenn der Strömungsweg so gestaltet ist, dass vorher keine andere Oberfläche getroffen wird.

In einer Variante kann die Strömung so geführt sein, dass der wenigstens eine Strömungsweg zwischen einem Austritt aus dem Schwebstofffilter und einem Auftreffen auf ein Transportgut, beispielsweise einem Produkt und/oder einem Behälter, ausschließlich andere Strömungslinien kontaktiert und keine Kontaktierung/Überstreichung anderer Flächen stattfindet.

Alternativ oder zusätzlich können zur Lösung der genannten Aufgabe die Merkmale des nebengeordneten, auf eine pharmazeutische Verarbeitungsvorrichtung gerichteten Anspruchs vorgesehen sein.

Insbesondere kann somit bei einer pharmazeutischen Verarbeitungsvorrichtung allgemeiner oder der eingangs beschrieben Art oder bei einer pharmazeutischen Verarbeitungsvorrichtung gemäß einem der vorangehenden Ausgestaltungen erfindungsgemäß vorgesehen sein, dass bei einer kontrollierten Umgebung, in der wenigstens eine Transportvorrichtung ausgebildet ist, die wenigstens eine magnetisch angetrieben, vorzugsweise levitiert, bewegliche Transporteinheit hat, ein Fördermittel zum Abführen von Wärme von einem Magnetfelderzeuger der Transportvorrichtung ausgebildet ist und/oder dass ein Fördermittel zum Fördern eines Kühlfluids zu einem Magnetfelderzeuger der Transportvorrichtung ausgebildet ist. Somit lässt sich Abwärme die bei einer Erzeugung eines Magnetfelds entsteht, ohne Beeinträchtigung der kontrollierten Umgebung abführen, und/oder eine gewünschte Temperatur, insbesondere eine Kälte, lässt sich einstellen.

Fördermittel können beispielsweise Fluide, bspw. Luft und/oder Wasser sein, oder ohne Stofftransport arbeiten, beispielsweise als Peltier-Element.

Die Transporteinheit, beispielsweise als Mover, oder ein Stator kann ein Magnetfelderzeuger sein oder einen solchen umfassen. Die Transporteinheit kann auch einen Permanentmagneten aufweisen, der passiv verbleibt und nicht zwingend einer Kühlung bedürfen.

Ein Stator kann beispielsweise eine veränderlichen Magnetfelderzeuger, insbesondere wie zuvor beschrieben, aufweisen, um ein Magnetfeld zu steuern. Solche Systeme produzieren in der Regel Abwärme.

Die wenigstens eine hierbei (zusätzliche) Kühlrippen aufweisen, die bevorzugt außerhalb der kontrollierten Umgebung angeordnet sein können.

Die wenigstens eine Luftaustrittsöffnung kann veränderbar, insbesondere verschließbar, ausgebildet ist. Dies kann beispielsweise während eines Reinigungsvorgangs während und/oder nach einer Verarbeitung einer toxischen Substanz von Vorteil sein.

Bei einer vorteilhaften Ausgestaltung kann vorgesehen sein, dass die wenigstens eine Luftaustrittsöffnung eine umlaufende Abweiserhöhung hat. Dies kann bei toxischen Anlagen von Vorteil sein oder allgemein, wenn gewaschen werden muss.

Bei einer vorteilhaften Ausgestaltung kann vorgesehen sein, dass das Fördermittel wenigstens einen Transportkanal aufweist, der in wenigstens einem Abschnitt durch die oder eine Begrenzungswand der kontrollierten Umgebung geführt ist.

Es ist somit auf einfache Weise Wärme nach außen, beispielsweise in eine nicht oder weniger kontrollierte Umgebung, ableitbar.

Bevorzugt ist der Transportkanal in zwei voneinander beabstandeten Abschnitten durch die Einhausung geführt, beispielsweise an derselben Begrenzungswand oder an voneinander verschiedenen, insbesondere voneinander beabstandeten, Begrenzungswänden.

Somit ist ein Kreislauf bildbar zum Abtransport von Wärme.

Jeder der Abschnitte kann an einem Ende oder beabstandet zu einem Ende sein.

Bei einer vorteilhaften Ausgestaltung kann vorgesehen sein, dass die kontrollierte Umgebung durch eine Einhausung definiert ist, die ein Oberteil und ein Unterteil hat, die über eine Schnittstelle miteinander verbunden sind. Dies kann beispielsweise eine Arbeitsteilung ermöglichen, bei der eine Luftführung an dem Oberteil und ein Innenaufbau am Unterteil ausgebildet oder montiert werden und bei der im Anschluss das Oberteil mit dem Unterteil verbunden wird. Es ist auch denkbar, dass die Luftführung auch im Unterteil stattfindet. So kann vorteilhafterweise die Abluft zur Komponentenkühlung verwendet werden, insbesondere, wenn nach einer Luftaustrittsöffnung eine Katalysatoreinheit eingebaut ist.

Hierbei kann vorgesehen sein, dass die Antriebsfläche oberhalb der Schnittstelle und/oder die wenigstens eine Luftaustrittsöffnung, zumindest teilweise, unterhalb oder auf Höhe der Schnittstelle ausgebildet ist. Dies ermöglicht eine Reduzierung einer Bauhöhe und/oder ermöglicht eine optimale Luftführung.

Alternativ oder zusätzlich kann hierbei vorgesehen sein, dass das Oberteil eine, insbesondere die bereits erwähnte, wenigstens eine Lufteintrittsöffnung und/oder die wenigstens eine Luftaustrittsöffnung und/oder das Unterteil einen Boden und/oder die wenigstens eine Luftaustrittsöffnung bildet. Dies ermöglicht eine möglichst vertikale oder umlenkungsarme Luftströmung.

Die Schnittstelle kann beispielsweise als ein Ort, an dem wo mehrere Anlagenteile zusammengefügt oder verbunden werden, charakterisierbar sein.

Die Begriffe "oberhalb", "auf Höhe", "unterhalb" können beispielsweise in Bezug auf die Hauptströmungsrichtung und/oder in Bezug auf eine Schwerfeld der Erde definiert sein.

Bei einer vorteilhaften Ausgestaltung kann vorgesehen sein, dass die wenigstens eine Transporteinheit zum gleichzeitigen Transport wenigstens zweier oder mehr als zweier pharmazeutischer Behälter (oder allgemein Transportgüter) eingerichtet ist. Dies ermöglicht eine gleichzeitige Verarbeitung mehrerer Behälter (oder allgemein Transportgüter). Hierbei kann es günstig sein, wenn die oder allgemein Transportgüter in einer vorzugsweise linearen Reihenanordnung angeordnet sind. Somit ist die bereits beschriebene Anordnung der Transportgüter außerhalb der Antriebsfläche besonders einfach realisierbar.

Es kann auch vorgesehen sein, dass die wenigstens eine Transporteinheit zum Transport des wenigstens einen pharmazeutischen Behälters außerhalb ihrer Grundfläche ausgebildet ist. Dies kann helfen, Verwirbelungen unterhalb des Behälters (oder des Transportgutes allgemein) zu vermeiden oder zu reduzieren.

Bei einer Ausgestaltung der Erfindung von möglicher eigenständiger erfinderischer Qualität sind die Merkmale des zweiten nebengeordneten Vorrichtungsanspruchs verwirklicht. Insbesondere wird somit alterativ oder ergänzend zu den vorstehenden Ausgestaltungen bei einer pharmazeutischen Verarbeitungsvorrichtung der eingangs beschriebenen Art oder nach einem der vorangehenden Ausgestaltungen vorgeschlagen gekennzeichnet, dass ein Transportweg der wenigstens einen Transporteinheit an der oder einer Antriebsfläche so eingerichtet ist, dass eine Öffnung eines mit der wenigstens einen Transporteinheit transportierten Transportguts, insbesondere eines, vorzugsweise pharmazeutischen, Behälters, während einem Transport, zumindest teilweise außerhalb der Antriebsfläche bewegt wird, insbesondere vor, während und/oder nach einem Befüllen und/oder einem Verschließen. Somit ist eine Verschmutzung oder Kontamination nach einem Befüllen und/oder vor einem Verschließen reduzierbar oder vermeidbar.

Bei einer vorteilhaften Ausgestaltung kann vorgesehen sein, dass ein Transportweg der wenigstens einen Transporteinheit an einer, beispielsweise der bereits erwähnten, Antriebsfläche so eingerichtet ist, dass eine Strömungslinie nach einem, vorzugsweise allseitigem, Umströmen eines, beispielsweise des bereits erwähnten, mit der wenigstens einen Transporteinheit transportierten Transportguts, insbesondere eines, beispielsweise des bereits erwähnten, Behälters, nicht auf die Antriebsfläche trifft. Somit ist ein Rückübertrag von Ablagerungen auf das Transportgut vermeidbar oder reduzierbar.

Es kann alternativ oder zusätzlich vorgesehen sein, dass ein, beispielsweise das bereits erwähnte, mit der wenigstens einen Transporteinheit transportierten Transportgut, insbesondere ein, beispielsweise der bereits erwähnte, Behälter, der ein pharmazeutischer Behälter sein kann, unterhalb einer Filterfläche wenigstens einer, beispielsweise der bereits erwähnten, wenigstens einen Lufteintrittsöffnung bewegbar ist. Die Filterfläche kann beispielsweise der bereits erwähnte Schwebstofffilter sein.

Bei einer vorteilhaften Ausgestaltung kann vorgesehen sein, dass ein Transportweg der wenigstens einen Transporteinheit an einer, beispielsweise der bereits erwähnten, Antriebsfläche so eingerichtet ist, dass das Transportgut, insbesondere der Behälter, nach einem Aufsetzen auf eine Transporteinheit, bis zum Verschließen, so transportiert wird, dass eine Behälteröffnung außerhalb der Antriebsfläche gehalten ist, insbesondere mindestens so weit, wie die halbe, ganze, doppelte Größe oder ein Vielfaches davon, der Behälteröffnung, alternativ auch gleich weit oder ein Vielfaches der Größe der Behälteröffnung. Dies ermöglicht ein möglichst störungsfreies Umströmen des gehaltenen Transportguts.

Zur Lösung der genannten Aufgabe bei einem Verfahren sind erfindungsgemäß die Merkmale des unabhängigen Verfahrensanspruchs vorgeschlagen. Insbesondere wird somit erfindungsgemäß bei einem Verfahren der eingangs beschriebenen Art erfindungsgemäß vorgeschlagen, dass die wenigstens eine Transporteinheit in wenigstens einem Wegabschnitt den wenigstens einen pharmazeutischen Behälter in einem an der Antriebsfläche seitlich vorbeiströmenden Strömungsweg einer Luftströmung transportiert. Dies ist ein einfaches Mittel, gerade bei geöffneten Behältern als Transportgut, um einen Übertrag von Dekontaminationen, die sich auf der Antriebsfläche gesammelt haben könnten, zu verhindern oder zumindest zu reduzieren.

Bei einer vorteilhaften Ausgestaltung kann vorgesehen sein, dass in dem Wegabschnitt eine Bearbeitungsstation, insbesondere eine Befüllstation und/oder eine Verschließstation, angefahren wird. Somit ist ein Eintrag vor dem Verschließen, insbesondere zwischen Befüllung und Verschließen, vermeidbar oder reduzierbar.

Bei einer vorteilhaften Ausgestaltung und/oder dass sich der Wegabschnitt über mehr als eine Hälfte, insbesondere mehr als 2/3 eines gesamten Fahrwegs der beladenen Transporteinheit erstreckt. Somit sind unkontrollierte Einträge, insbesondere von Partikeln, Mikroorganismen oder anderen nicht erwünschten Stoffen, während eines langen Transportwegs vermeidbar.

Bei einer vorteilhaften Ausgestaltung kann vorgesehen sein, dass der Wegabschnitt einen Bereitstellungspunkt, an dem wenigstens ein leerer, unverschlossener Behälter an die wenigstens eine Transporteinheit übergeben wird, und/oder einen Entnahmepunkt, an dem wenigstens ein befüllter, unverschlossener Behälter von der wenigstens einen Transporteinheit entnommen wird, hat, insbesondere wobei der Wegabschnitt den Bereitstellungspunkt mit dem Entnahmepunkt in einem Fertigungsfluss verbindet. Somit ist ein Eintrag in ein abzufüllendes Produkt vermeidbar.

Bei einer vorteilhaften Ausgestaltung kann vorgesehen sein, dass die wenigstens eine Transporteinheit in dem Wegabschnitt längs einer Begrenzung der Antriebsfläche verfahren wird. Somit ist auf einfache Weise das Transportgut während des Transports außerhalb der Antriebsfläche haltbar.

Hierbei kann vorgesehen sein, dass eine Reihenanordnung von wenigstens zwei oder mehr als zwei von der Transporteinheit transportierten Behältern in Fahrtrichtung ausgerichtet wird. Somit ist auf einfache Weise ein simultanes Halten von mehreren Behältern oder allgemein Transportgütern außerhalb der Antriebsfläche erreichbar.

Bei einer vorteilhaften Ausgestaltung kann vorgesehen sein, dass in dem Wegabschnitt ein Abstand des wenigstens einen pharmazeutischen Behälters von einem entlang des Strömungsweges stromabwärtigen Strömungshindernis ein Vielfaches, insbesondere wenigstens ein Zweifaches, Dreifaches, Fünffaches oder Zehnfaches, einer Höhe des wenigstens einen pharmazeutischen Behälters über der Antriebsfläche beträgt. Somit ist eine nachfolgende Verwirbelung der Luftströmung entfernt von der Antriebsfläche haltbar.

Hierbei kann das Strömungshindernis von einer, beispielsweise der bereits erwähnten, die wenigstens eine Luftaustrittsöffnung ausbildenden, Begrenzungswand gebildet sein. Somit sind weitere Strömungshindernisse, die eine unkontrollierte Einwirkung auf eine Luftströmung haben könnten, auf dem Weg durch die kontrollierte Umgebung stromabwärts des Behälters vermeidbar.

Allgemein kann vorgesehen sein, dass der wenigstens eine pharmazeutische Behälter auf einem Verbindungselement zwischen zwei auf der Antriebsfläche unabhängig voneinander magnetisch levitiert bewegbaren Teiltransporteinheiten transportiert wird. Dies ermöglicht es, mehr als einen Behälter gleichzeitig zu transportieren, und kann helfen, einen Freiraum stromabwärts des oder der transportierten Behälter zu vergrößern, indem der oder die Behälter beispielsweise außerhalb einer Grundfläche jedes der Transporteinheiten gehalten ist.

Hierbei kann ein Verfahren, beispielsweise losgelöst oder in Kombination mit einem der beschrieben und/oder beanspruchten Merkmalskombinationen, vorsehen, dass die wenigstens eine Transporteinheit ihren transportierten wenigstens einen pharmazeutischen Behälter an eine, beispielsweise die bereits erwähnte, Bearbeitungsstation übergibt. Es kann hierbei weiter vorgesehen sein, dass die wenigstens eine Transporteinheit zur Übergabe zumindest partiell abgesenkt und/oder gekippt wird, insbesondere transversal zu einer Koppelrichtung verfährt.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt in schematisierter Darstellung
- Fig. 1: eine erfindungsgemäße pharmazeutische Verarbeitungsvorrichtung in einer Vertikalschnittdarstellung,
- Fig. 2: eine zweite erfindungsgemäße pharmazeutische Verarbeitungsvorrichtung in einer Vertikalschnittdarstellung,
- Fig. 3: eine dritte erfindungsgemäße pharmazeutische Verarbeitungsvorrichtung in einer Vertikalschnittdarstellung,
- Fig. 4: eine vierte erfindungsgemäße pharmazeutische Verarbeitungsvorrichtung in einer Vertikalschnittdarstellung,
- Fig. 5: eine fünfte erfindungsgemäße pharmazeutische Verarbeitungsvorrichtung in einer Vertikalschnittdarstellung,
- Fig. 6: eine sechste erfindungsgemäße pharmazeutische Verarbeitungsvorrichtung in einer Vertikalschnittdarstellung,
- Fig. 7: eine siebte erfindungsgemäße pharmazeutische Verarbeitungsvorrichtung in einer Vertikalschnittdarstellung,
- Fig. 8: eine erste Variante einer pharmazeutischen Verarbeitungsvorrichtung in einer Vertikalschnittdarstellung,
- Fig. 9: eine zweite Variante einer pharmazeutischen Verarbeitungsvorrichtung in einer Vertikalschnittdarstellung,
- Fig. 10: eine achte erfindungsgemäße pharmazeutische Verarbeitungsvorrichtung in einer Draufsicht in einem Horizontalschnitt,
- Fig. 11: eine dritte Variante einer pharmazeutischen Verarbeitungsvorrichtung in einer Vertikalschnittdarstellung,
- Fig. 12: eine neunte erfindungsgemäße pharmazeutische Verarbeitungsvorrichtung in einer Draufsicht in einem Horizontalschnitt,
- Fig. 13: die pharmazeutische Verarbeitungsvorrichtung gemäß Fig. 12 in einer Vertikalschnittdarstellung,
- Fig. 14: eine zehnte erfindungsgemäße pharmazeutische Verarbeitungsvorrichtung in einer Vertikalschnittdarstellung und
- Fig. 15: eine elfte erfindungsgemäße pharmazeutische Verarbeitungsvorrichtung in einer Vertikalschnittdarstellung.

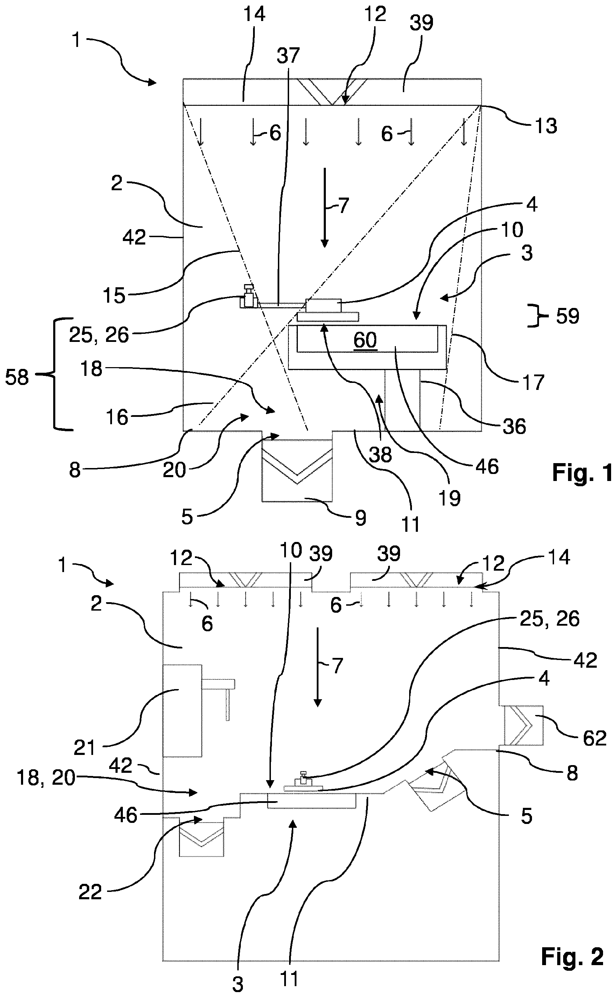

Eine in Fig. 1 gezeigte, im Ganzen mit 1 bezeichnete pharmazeutische Verarbeitungsvorrichtung hat eine kontrollierte Umgebung 2, in den eine Transportvorrichtung 3 angeordnet ist. Die Transportvorrichtung 3 hat mehrere Transporteinheiten 4, die unabhängig voneinander verfahrbar sind. Die Transporteinheiten 4 werden hierbei jeweils magnetisch levitiert und durch eine geeignet Steuerung eines Magnetfeldes, wie sie beispielsweise von Planarmotoren bekannt ist, bewegt.

Die kontrollierte Umgebung 2 weist eine Luftaustrittsöffnung 5 mit anschließendem Schwebstofffilter 39 auf, durch die Luft aus der kontrollierten Umgebung 2 austreten kann.

Hierdurch wird eine Luftströmung 6 erzeugt, die Vorzugsrichtung eines Partikeltransports für eventuell in der kontrollierten Umgebung erzeugte oder aufgewirbelte organische oder anorganische Partikel vorgibt.

Diese Luftströmung 6 ist durch ein ortsabhängiges Geschwindigkeitsfeld repräsentiert, dessen Mittelwert eine Hauptströmungsrichtung 7 definiert.

Die bereits erwähnte Luftaustrittsöffnung 5 ist in einer Begrenzungswand 8 der kontrollierten Umgebung ausgebildet, die transversal oder quer zu der Hauptströmungsrichtung 7 ausgerichtet ist. Somit zeichnet die Luftaustrittsöffnung 5 eine Ebene aus, die lokal mit der Begrenzungswand 8 übereinstimmt und die ebenfalls transversal zu der Hauptströmungsrichtung 8 ausgerichtet ist.

Die Begrenzungswand 8 ist somit in einem die Luftaustrittsöffnung 5 umfassenden Abschnitt 9 transversal zu der Hauptströmungsrichtung 7 ausgerichtet. Der Winkel zwischen dem Abschnitt und der Hauptströmungsrichtung 7 liegt bevorzugt zwischen 45° und 135° und im Ausführungsbeispiel ungefähr oder genau bei 90°.

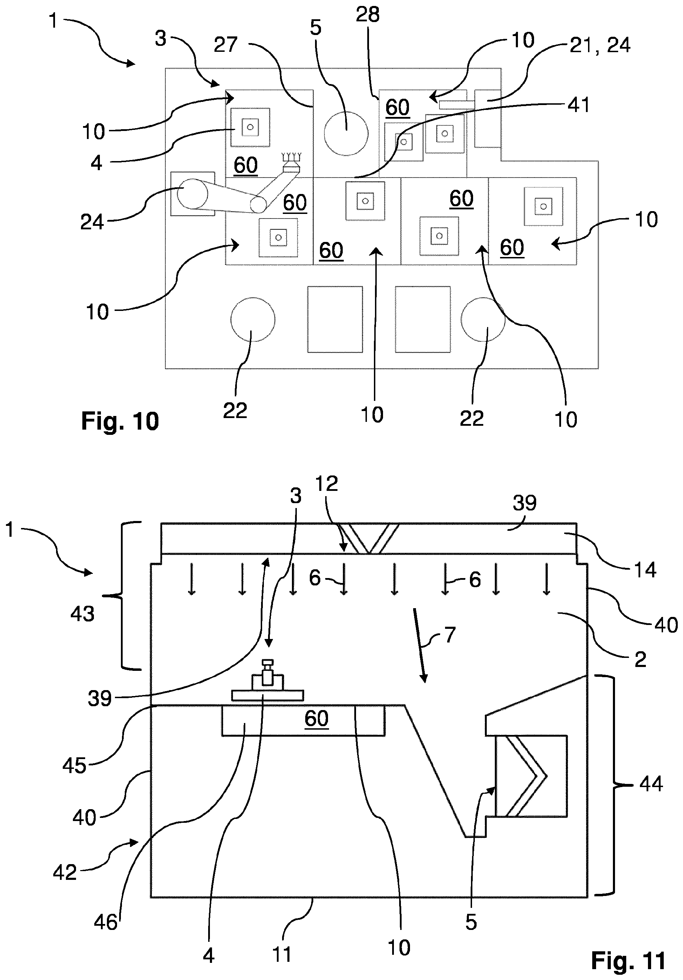

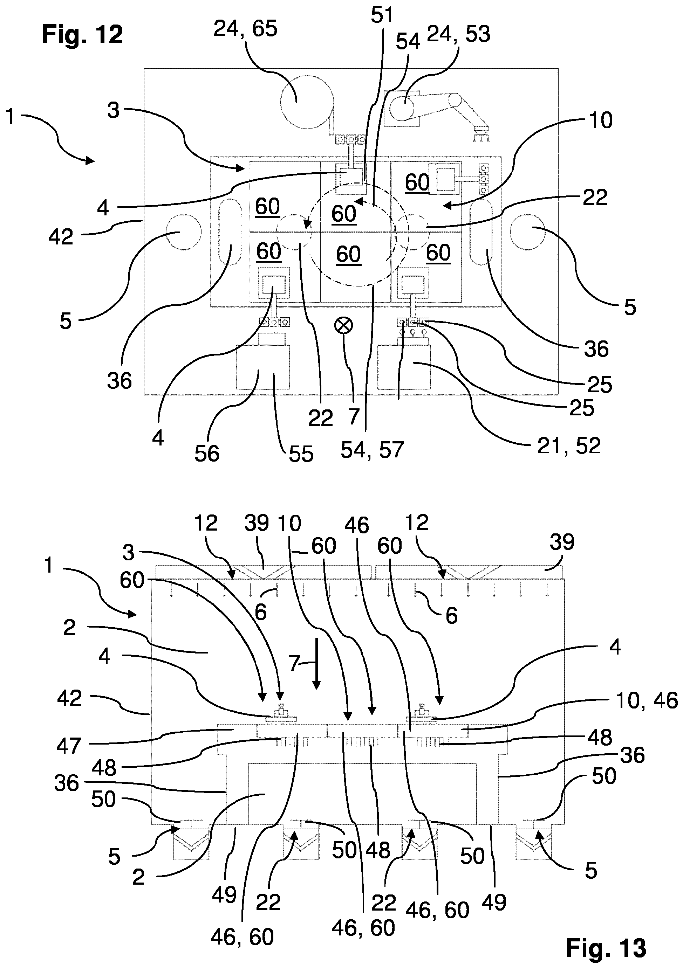

Die Transportvorrichtung 3 hat eine Antriebsfläche 10, welche durch mehrere Kacheln (60, vgl. Fig. 10 und 12) gebildet ist (in Fig. 1 ist zur Vereinfachung der Darstellung nur eine Kachel 60 gezeigt), auf der die levitierten Transporteinheiten 4 verfahrbar sind. Im Beispiel sind die Transporteinheiten 4 in wenigstens zwei voneinander unabhängige Richtungen auf der Antriebsfläche 10 verfahrbar und zusätzlich anhebbar, kippbar und um eine Ache senkrecht zu der Antriebsfläche 10 drehbar. Die Antriebsfläche 10 deckt einen Magnetfelderzeuger ab, dessen steuerbare Magnetfeldlinien durch die Antriebsfläche 10 austreten, um die Transporteinheiten 4 zu levitieren und kontrolliert zu bewegen.

Die Antriebsfläche 10 ist hierbei ebenfalls transversal zu der Hauptströmungsrichtung 7 ausgerichtet, so dass sowohl die Antriebsfläche 10 als auch die Luftaustrittsöffnung 5 von der Luftströmung 6 mehr oder weniger frontal angeblasen werden.

Die erwähnte Begrenzungswand 8 bildet einen Boden 11. Man kann somit sagen, dass die Luftaustrittsöffnung 5 im Boden 11 der kontrollierten Umgebung ausgebildet ist.

Die Luftströmung 6 wird in an sich bekannter Weise durch wenigstens eine Lufteintrittsöffnung 12 angetrieben, durch die gereinigten Luft in die kontrollierte Umgebung 2 eintritt.

Diese Lufteintrittsöffnung 12 ist in einer weiteren Begrenzungswand 13 ausgebildet und füllt diese nahezu oder vollständig aus. Hierzu ist in an sich bekannter Weise ein Schwebstofffilter 39 ausgebildet. Da die weitere Begrenzungswand 13 der zuerst genannten Begrenzungswand 8 gegenüberliegend angeordnet ist, bildet sie im Ausführungsbeispiel eine Decke 14 der kontrollierten Umgebung 2.

Allgemein kann gesagt werden, dass ein Filter, insbesondere ein Schwebstofffilter 39, vorzugsweise der Filterklasse H13, H14 oder U15, an der Lufteintrittsöffnung 12 und/oder der Luftaustrittsöffnung 5, 22 angeordnet ist. Insbesondere wird dadurch die Luft gereinigt und unerwünschte Partikel und Organismen werden abgeschieden.

Fig. 1 zeigt mit Hilfslinien 15, 16, 17, dass die Luftaustrittsöffnung 5 im Strömungsschatten 18, und zwar teilweise im Strömungskernschatten 19 und teilweise im Strömungshalbschatten 20, angeordnet ist. Der Strömungsschatten 18 umfasst somit den Strömungskernschatten 19 und den Strömungshalbschatten 20. Der Strömungskernschatten 19 ist hier der Bereich, in dem von keinem Punkt der Lufteintrittsöffnung 12 Luft in gerader Linie strömen kann, ohne die Antriebsfläche 10 zu treffen. Der Strömungshalbschatten 20 ist derjenige Bereich, bei dem dies nur für einen Teil der Lufteintrittsöffnung 12 gilt - so kann im Beispiel nach Fig. 1 Luft aus einem linken Teil der Lufteintrittsöffnung 12 in gerader Linie in den Strömungshalbschatten 20 eintreten.

Fig. 2 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu der Fig. 1 gelten daher zu Fig. 2 entsprechend.

Das Ausführungsbeispiel nach Fig. 2 unterscheidet sich von dem vorangehenden Ausführungsbeispiel zumindest dadurch, dass es neben der Antriebsfläche 10 noch Bearbeitungsstation 21 gibt.

Die Luftaustrittsöffnung 5 wird von der Luftströmung 6 direkt angeströmt, während sich eine weitere Luftaustrittsöffnung 22 im Strömungsschatten 18 (genauer im Strömungshalbschatten 20) der Bearbeitungsstation 21 befindet.

Die Luftaustrittsöffnung 5 ist nicht rechtwinklig zur Hauptströmungsrichtung 7 ausgerichtet, sondern nimmt einen spitzen Winkel zu dieser ein. Die Luftaustrittsöffnung 5 ist in Bezug zur Hauptströmungsrichtung 7 stromaufwärts der Antriebsfläche 10 angeordnet, die weitere Luftaustrittsöffnung 22 dagegen stromabwärts. Da die Hauptströmungsrichtung 7 vertikal verläuft, kann auch gesagt werden, dass die Luftaustrittsöffnung 5 höher als die Antriebsfläche 10 angeordnet, die weitere Luftaustrittsöffnung 22 dagegen tiefer.

Eine zusätzliche Luftaustrittsöffnung 62 ist oberhalb der Antriebsfläche 10 in einer vertikalen Begrenzungswand, die eine seitliche Begrenzung 35 der Einhausung 42 bildet, angeordnet. Die zusätzliche Luftaustrittsöffnung 62 ist somit parallel zu der Hauptströmungsrichtung 7 ausgerichtet.

Die Decke 14 in Fig. 2 weist zwei voneinander beabstandete Lufteintrittsöffnungen 12 auf, die gemeinsam den Eintritt der Luftströmung 6 in die kontrollierte Umgebung definieren. Nachfolgend der Lufteintrittsöffnungen 12 bildet sich die, vorzugsweise laminare, Luftströmung aus..

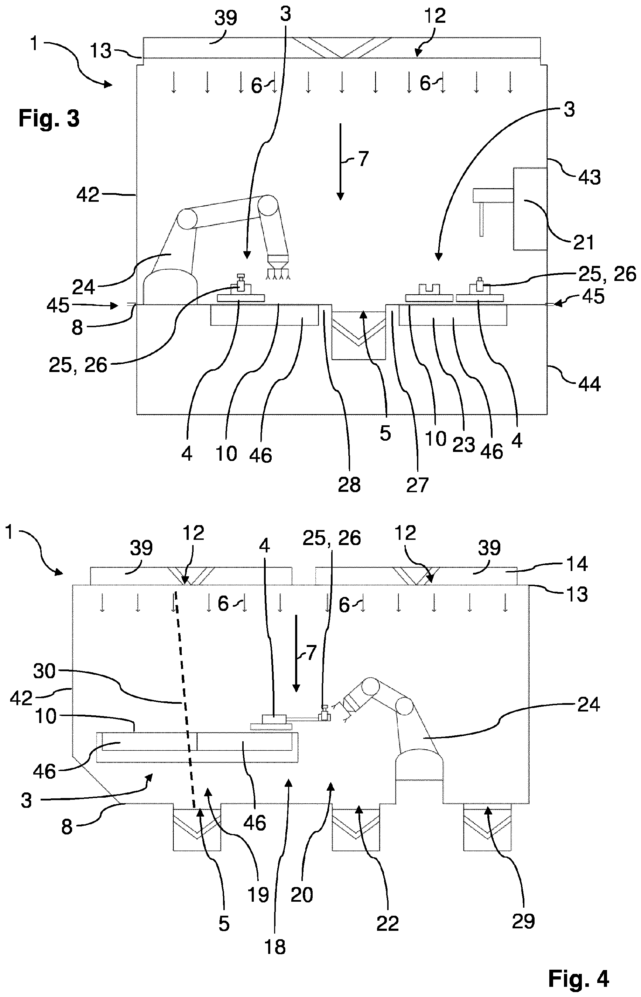

Fig. 3 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 und 2 gelten daher zu Fig. 3 entsprechend.

Das Ausführungsbeispiel nach Fig. 3 unterscheidet sich von dem vorangehenden Ausführungsbeispiel zumindest dadurch, dass mehrere Antriebsflächen 10, 23 ausgebildet sind. Im Ausführungsbeispiel sind die Antriebsflächen 10, 23 gleichartig in Bezug auf die Hauptströmungsrichtung 7 ausgerichtet und nehmen zwischen sich eine Luftaustrittsöffnung 5 auf. In einer nicht gezeigten vertikalen Schnittansicht können die Antriebsflächen 10 auch verbunden sein. Die Luftaustrittsöffnung 5 ist daher an zumindest zwei (hier einander gegenüber liegenden) Randabschnitten 27, 28 eingefasst.

Zwei Bearbeitungsstationen 21, 24 führen unterschiedliche Prozessschritte aus.

Beispielsweise kann an der Bearbeitungsstation 21 ein Befüllen von Behältern 25, die als Transportgut 26 auf den Transporteinheiten 4 transportiert werden, durchführbar sein. An der Bearbeitungsstation 24 kann dagegen ein Verschließen und/oder ein Entladen und/oder ein Beladen und/oder ein Inspizieren und/oder weitere Fill-finish typische Arbeiten, der Behälter erfolgen.

Weiter ist gezeigt, dass es einen Oberteil 43 und einen Unterteil 44 gibt, wobei eine Trennung auf Höhe einer Schnittstelle 45 erfolgt. Die Luft, welche durch den Luftaustritt 5 austritt, kann dabei in den Unterteil 44 geleitet werden.

Fig. 4 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 3 gelten daher zu Fig. 4 entsprechend.

Im Unterschied zu den vorangehenden Ausführungsbeispielen ist hier die Antriebsfläche 10 nicht als Teil der Begrenzungswand 8 ausgebildet, sondern dieser in Bezug auf die Hauptströmungsrichtung 7 vorgelagert.

Bei dem Ausführungsbeispiel gemäß Fig. 4 ist eine Luftaustrittsöffnung 5 unterhalb der Antriebsfläche 10 (und somit im Strömungskernschatten 19) angeordnet. Eine weitere Luftaustrittsöffnung 22 ist seitlich versetzt zu der Antriebsfläche 10 aber noch im Strömungshalbschatten 20 angeordnet. Eine dritte Luftaustrittsöffnung 29 ist direkt und frei anstömbar außerhalb des Strömungsschattens 18 der Antriebsfläche 10 angeordnet.

Erkennbar verläuft eine Verbindungsgerade 30 zwischen (einem Punkt) der Luftaustrittsöffnung 5 und der Lufteintrittsöffnung 12 durch die Antriebsfläche 10.

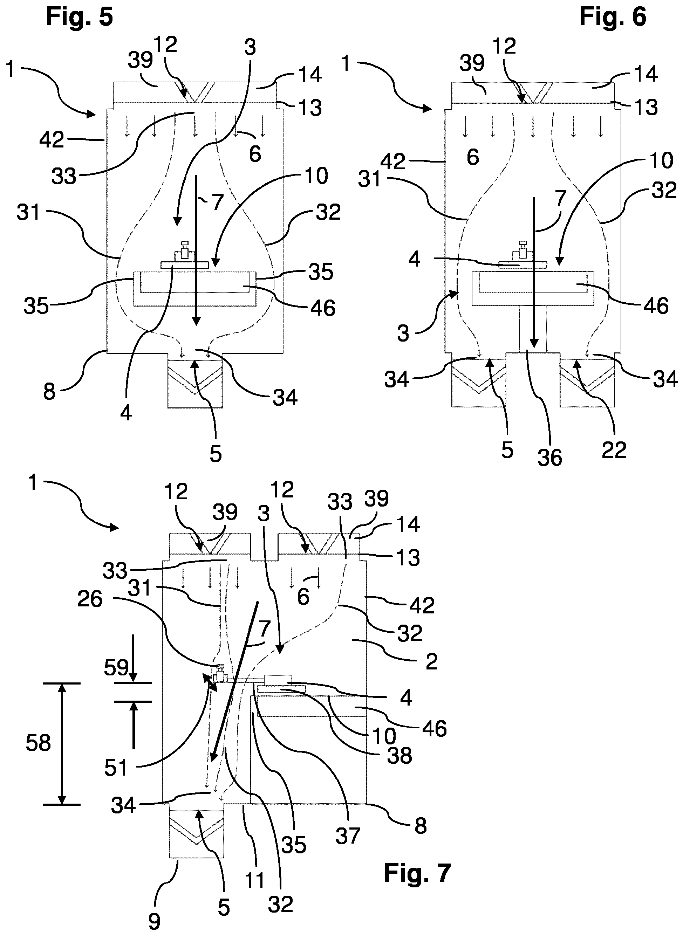

Fig. 5 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 4 gelten daher zu Fig. 5 entsprechend.

Fig. 5 zeigt eine ähnliche Anordnung der Antriebsfläche 10. Es sind zwei Strömungswege 31, 32 gezeigt, die zwischen sich die Antriebsfläche 10 einschließen. Diese Strömungswege 31, 32 können einen gemeinsamen Startpunkt 33 und einen gemeinsamen Endpunkt 34 aufweisen und verlaufen jeweils an einer seitlichen Begrenzung 35 der Antriebsfläche 10 vorbei.

Obwohl die Strömungswege 31, 32 sich zunächst voneinander entfernen und später wieder vereinigen, ist die Hauptströmungsrichtung 7 weiterhin zumindest näherungsweise vertikal ausgerichtet.

Fig. 6 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 5 gelten daher zu Fig. 6 entsprechend.

Die Antriebsfläche 10 ist hier auf einem Ständer 36 angeordnet, der verhindert, dass sich die Strömungswege 31, 32 hinter der Antriebsfläche 10 wieder vereinigen. Auf jeder Seite des Ständers 36 ist eine Luftaustrittsöffnung 12, 22 angeordnet. Die Strömungswege 31, 32 haben somit einen gemeinsamen Startpunkt 33 und verschiedene Endpunkte 34. Der Ständer 36 kann in einem nicht gezeigten Ausführungsbeispiel nicht durchgehend verlaufen, sodass die Strömungswege unterhalb der Antriebsfläche auch wieder zusammenkommen könnten.

Fig. 7 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 6 gelten daher zu Fig. 7 entsprechend.

Fig. 7 zeigt einen asymmetrischen Aufbau, bei dem die Luftströmung 6, die aus zwei Lufteintrittsöffnungen 12 in die kontrollierte Umgebung 2 gelangt, an einer gemeinsamen seitlichen Begrenzung 35 der Antriebsfläche 10 vorbeiströmt. Die gezeigten Strömungswege 31, 32 haben somit verschiedene Startpunkte 33, jedoch einen gemeinsamen Endpunkt 34. Andere, nicht gezeigte Strömungswege, können weiterhin einen gemeinsamen Startpunkt aufweisen.

Die Transporteinheit 4 hat einen Arm 37, an dem ein Transportgut 26 außerhalb einer Grundfläche 38 der Transporteinheit 4 gehalten werden kann. Das Transportgut 26 kann somit in der Luftströmung 6 so gehalten werden, dass die auftreffende Luft vorher keine andere Oberflächen (nach Austritt aus einem Schwebstofffilter 39) kontaktiert hat und dass die nachfolgenden Strömungshindernisse erst weit entfernt von dem Transportgut 26 eine Störung der Luftströmung 6 bewirken können.

In Fig. 7 ist ersichtlich, dass die Hauptströmungsrichtung 7 durch den asymmetrischen Aufbau leicht geneigt angeordnet ist. Die Begrenzungswand 8 ist im Abschnitt 9 der Luftaustrittsöffnung 5 weiterhin transversal zur Hauptströmungsrichtung 7 ausgerichtet.

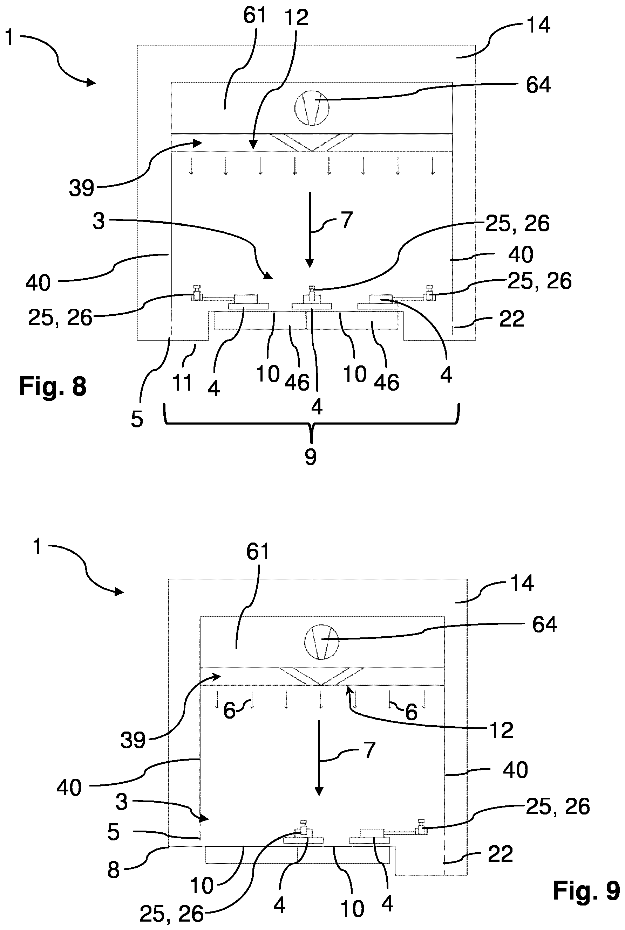

Fig. 8 zeigt eine Variante einer pharmazeutischen Verarbeitungsvorrichtung. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 7 gelten daher zu Fig. 8 entsprechend.

Die Darstellung gemäß Fig. 8 unterscheidet sich von den vorangehenden Figuren dadurch, dass die Luftaustrittsöffnungen 5, 22 nicht in einem transversal zur Hauptströmungsrichtung 7 ausgerichteten Abschnitt 9 angeordnet sind, sondern in einer vertikalen Seitenwand 40. Die Luftaustrittsöffnungen 5, 22 sind in Hauptströmungsrichtung 7 stromabwärts der Antriebsfläche 10 angeordnet.

Fig. 9 zeigt eine asymmetrische Variante zu Fig. 8.

Fig. 10 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 9 gelten daher zu Fig. 10 entsprechend.

Fig. 10 zeigt eine Luftaustrittsöffnung 5, die an drei Randabschnitten 27, 28, 41 von der Antriebsfläche 10 eingefasst wird. Weitere Luftaustrittsöffnungen 22 können frei platziert sein.

Fig. 11 zeigt eine Variante einer pharmazeutischen Verarbeitungsvorrichtung. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 10 gelten daher zu Fig. 11 entsprechend.

Die kontrollierte Umgebung 2 hat eine Einhausung 42, zu der der Boden 11, die Decke 14 und die Seitenwände 40 gehören. Die Einhausung 42 hat ein Oberteil 43, zu dem die Decke 14 gehört, und ein Unterteil 44, zu dem der Boden 11 gehört. Oberteil 43 und Unterteil 44 sind an einer mechanischen Schnittstelle 45 miteinander gasdicht verbunden. In einem nicht gezeigten Beispiel kann der Boden 11, zumindest teilweise, auch zum Oberteil 43 gehören, zum Beispiel durch entsprechende Verlegung der Schnittstelle 45.

Die Antriebsfläche 10 und die Luftaustrittsöffnung 5 gehören zum Unterteil 44, während die Lufteintrittsöffnung 12 zum Oberteil 43 gehören.

Fig. 12 und 13 zeigen ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 11 gelten daher zu Fig. 12 und 13 entsprechend.

Fig. 12 und 13 zeigen, dass die Luftaustrittsöffnungen 5 wieder vollständig in Bezug auf eine Hauptströmungsrichtung 7 unterhalb einer aufgeständerten Antriebsfläche 10 angeordnet sind.

Die Magnetfelderzeuger 46 sind in einem Transportkanal 47 für ein Kühlfluid (z.B. Luft, Wasser, etc.) angeordnet. Der Transportkanal 47 weist ein nicht näher gezeigtes Fördermittel (z.B. Pumpe, Ventilator) auf, um das Kühlfluid an Kühlrippen 48 der Magnetfelderzeuger 46 vorbeizuführen.

Der Transportkanal 47 ist in zwei Abschnitten 49 durch die Einhausung 42 geführt und mündet somit nach außen, um das Kühlfluid zum Wärmetransport zirkulieren zu können. In diesem Fall erfolgt die Verbindung zwischen Abschnitten 49 und Transportkanal 47 über die Ständer 36.

Die Luftaustrittsöffnungen 5, 22 sind - wie bei den übrigen Figuren auch - mit einem Verschlusselement 50 versehen, beispielsweise zum Verschluss während einer Reinigung.

Fig. 12 zeigt beispielhaft, dass jede Transporteinheit 4 mehrere (hier beispielsweise drei) Behälter 25 gleichzeitig transportieren kann. In Fig. 13 sind die Transporteinheiten4 ausgetauscht und haben nur einen Behälter aufgenommen.

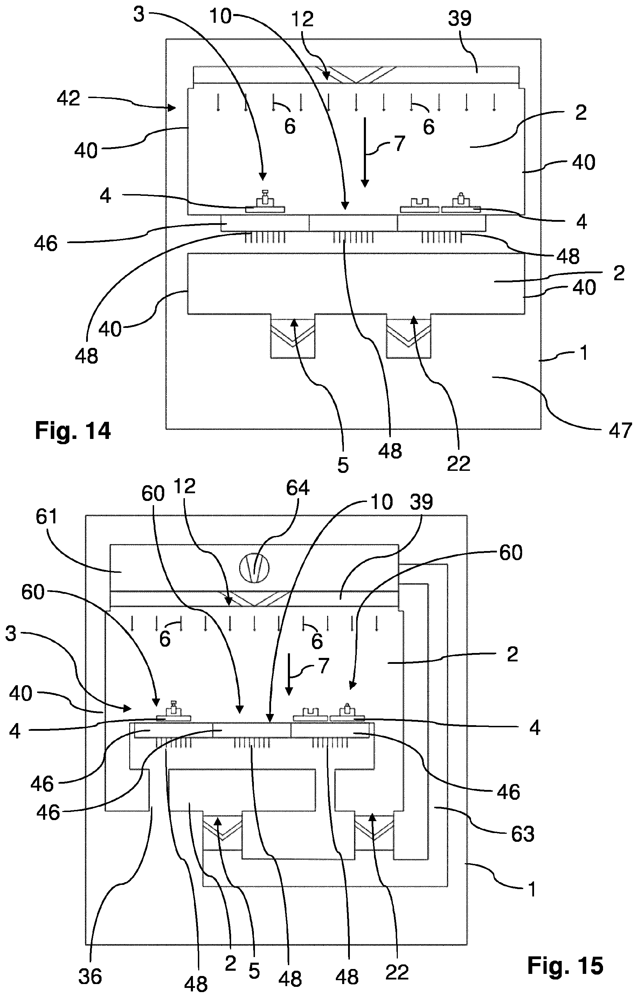

Fig. 14 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 13 gelten daher zu Fig. 14 entsprechend.

In Fig. 14 ist der Transportkanal 47 beidseits durch die Seitenwände 40 der Einhausung 42 geführt. Der Transportkanal 47 wird dadurch von der Luft umströmt, die durch die pharmazeutischen Verarbeitungsvorrichtung 1 strömen kann und/oder (nicht gezeigt) mit einer Zu- und Abluft verbunden ist. Der Transportkanal 47 selber kann mit derselben Luft durchströmt, und somit temperaturgeregelt werden, und/oder von einem anderen, insbesondere dem oder einem bereits erwähnten, Fluid passiert werden.

Fig. 15 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 14 gelten daher zu Fig. 15 entsprechend.

Fig. 15 zeigt eine Rückführung (über eine Zirkulationsrückführung 63) der aus den Luftaustrittsöffnungen 5, 12 austretenden Luft zu der Lufteintrittsöffnung 12 zur Bildung einer Zirkulation. Eine Ventilator 64 fördert in an sich bekannter Weise Luft, wodurch sich die Strömung 6 ausbildet.

Fig. 12 zeigt die Ausführung des erfindungsgemäßen Verfahrens, bei dem die wenigstens eine Transporteinheit 4 in wenigstens einem Wegabschnitt 51 den wenigstens einen pharmazeutischen Behälter 25 in einem an der Antriebsfläche 10 seitlich vorbeiströmenden Strömungsweg 31, 32 der Luftströmung 6 transportiert.

In dem Wegabschnitt 51 werden eine Bearbeitungsstation 21, die als Befüllstation 52 ausgebildet ist, und eine Bearbeitungsstation 24, die als Verschließstation 53 ausgebildet ist, und eine Bearbeitungsstation, die als Materialzufuhr 65, beispielsweise ein Sortiertopf, nacheinander angefahren. Die genaue Anordnung und die Art der Bearbeitungsstationen 21, 24 ist beispielhaft und kann bei weiteren Ausführungsbeispielen abweichend gestaltet sein. Oft wird jedoch eine Arbeitsreihenfolge Bereitstellen-Befüllen-(Prüfen-)Verschließen-(Sichern-)Abgeben realisiert sein. Vorzugsweise zumindest das Bereitstellen-Befüllen-Verschliessen wird in derselben kontrollierten Umgebung durchgeführt, wobei diese aus mehreren, bei bedarf zueinander abtrennbaren, Räumen / Kammern bestehen kann.

Der Wegabschnitt 51 erstreckt sich über mehr als 2/3 eines gesamten Fahrwegs 54 der beladenen Transporteinheit 4.

Der Wegabschnitt 51 läuft von einen Bereitstellungspunkt 55, an dem wenigstens ein leerer, unverschlossener Behälter 25 an die wenigstens eine Transporteinheit 4 übergeben wird, bis zu einem Entnahmepunkt 56, an dem wenigstens ein befüllter, unverschlossener Behälter 25 von der wenigstens einen Transporteinheit 4 entnommen wird. Der Wegabschnitt 51 ist somit Teil des Fertigungsflusses 57.

Es ist ersichtlich, dass die wenigstens eine Transporteinheit 4 in dem Wegabschnitt 51 längs der Begrenzung der Antriebsfläche 10 verfahren wird. Trägt die Transporteinheit 4 eine Reihenanordnung von wenigstens zwei oder mehr als zwei Behältern 25, so ist diese Reihenanordnung längs der Fahrtrichtung ausgerichtet.

In Fig. 7 ist gezeigt, dass in dem Wegabschnitt 51 ein Abstand 58 des wenigstens einen pharmazeutischen Behälters 25 (oder allgemein des Transportguts 26) von einem entlang des Strömungsweges stromabwärtigen Strömungshindernis, hier dem Boden 11, ein Vielfaches einer Höhe 59 des wenigstens einen pharmazeutischen Behälters 25 (oder allgemein des Transportgutes 26) über der Antriebsfläche 10 beträgt.

Die Figuren 8, 9 und 15 zeigen beispielhaft für alle Ausführungsbeispiele, dass dem Schwebstofffilter 39 an der Lufteintrittsöffnung 12 ein Plenum 61 vorgeschaltet sein kann. Das an sich bekannte Plenum 61 kann beispielsweise dazu dienen, einen von dem Ventilator 64 oder auf andere Weise erzeugten Luftdruck gleichmäßig auf den Schwebstofffilter 39 zu verteilen.

Bei einer pharmazeutischen Verarbeitungsanlage 1 wird somit erfindungsgemäß vorgeschlagen, wenigstens eine Luftaustrittsöffnung 5 einer kontrollierten Umgebung 2 in einem Abschnitt 9 einer Begrenzungswand 8 so auszurichten und anzuordnen, dass der Abschnitt 9 transversal zu einer Hauptströmungsrichtung 7, die in der kontrollierten Umgebung 2 herrscht, ausgerichtet ist.

### Bezugszeichenliste

- 1: pharmazeutische Verarbeitungsvorrichtung
- 2: kontrollierten Umgebung
- 3: Transportvorrichtung
- 4: Transporteinheit
- 5: Luftaustrittsöffnung
- 6: Luftströmung
- 7: Hauptströmungsrichtung
- 8: Begrenzungswand
- 9: Abschnitt
- 10: Antriebsfläche
- 11: Boden
- 12: Lufteintrittsöffnung
- 13: weitere Begrenzungswand
- 14: Decke
- 15: Hilfslinie
- 16: Hilfslinie
- 17: Hilfslinie
- 18: Strömungsschatten
- 19: Strömungskernschatten
- 20: Strömungshalbschatten
- 21: Bearbeitungsstation
- 22: weitere Luftaustrittsöffnung
- 23: Antriebsfläche
- 24: Bearbeitungsstation
- 25: Behälter
- 26: Transportgut
- 27: Randabschnitt
- 28: Randabschnitt
- 29: dritte Luftaustrittsöffnung
- 30: Verbindungsgerade
- 31: (erster) Strömungsweg
- 32: (zweiter) Strömungsweg
- 33: Startpunkt
- 34: Endpunkt
- 35: seitliche Begrenzung
- 36: Ständer
- 37: Arm
- 38: Grundfläche
- 39: Schwebstofffilter
- 40: Seitenwand
- 41: Randabschnitt
- 42: Einhausung
- 43: Oberteil
- 44: Unterteil
- 45: Schnittstelle
- 46: Magnetfelderzeuger
- 47: Transportkanal
- 48: Kühlrippe
- 49: Abschnitt
- 50: Verschlusselement
- 51: Wegabschnitt
- 52: Befüllstation
- 53: Verschließstation
- 54: Fahrweg
- 55: Bereitstellungspunkt
- 56: Entnahmepunkt
- 57: Fertigungsfluss
- 58: Abstand
- 59: Höhe
- 60: Kachel
- 61: Plenum
- 62: zusätzliche Luftaustrittsöffnung
- 63: Zirkulationsrückführung
- 64: Ventilator
- 65: Materialzufuhr

## Patentansprüche

1. Pharmazeutische Verarbeitungsvorrichtung (1), mit einer kontrollierten Umgebung (2), in der wenigstens eine Transportvorrichtung (3) ausgebildet ist, die wenigstens eine magnetisch angetrieben, vorzugsweise levitiert, bewegliche Transporteinheit (4) hat, wobei die kontrollierte Umgebung (2) wenigstens eine Luftaustrittsöffnung (5) aufweist, wobei eine Luftströmung (6)in der kontrollierten Umgebung (2) eine Hauptströmungsrichtung (7) definiert, **dadurch gekennzeichnet, dass** die wenigstens eine Luftaustrittsöffnung (5, 22, 29) zumindest in einem transversal, insbesondere in einem Winkel zwischen 45° und 135° oder senkrecht, zu der Hauptströmungsrichtung (7) ausgerichteten Abschnitt (9) einer Begrenzungswand(8) ausgebildet ist.

2. Pharmazeutische Verarbeitungsvorrichtung (1) nach dem vorangehenden Anspruch, **dadurch gekennzeichnet, dass** eine Antriebsfläche (10, 23) der Transportvorrichtung (3) transversal, insbesondere in einem Winkel zwischen 45° und 135° oder senkrecht, oder längs zu der Hauptströmungsrichtung (7) ausgerichtet ist und/oder dass die Begrenzungswand (8) einen Boden (11) der kontrollierten Umgebung (2) bildet.

3. Pharmazeutische Verarbeitungsvorrichtung (1) nach einem der vorangehenden Ansprüche, **dadurch gekennzeichnet, dass** wenigstens eine Lufteintrittsöffnung (12) in einer der Begrenzungswand (8) gegenüber liegenden weiteren Begrenzungswand (13), insbesondere einer Decke (14) der kontrollierten Umgebung (2), ausgebildet ist und/oder dass wenigstens eine Luftaustrittsöffnung (5, 22, 29) zumindest teilweise in einem Strömungsschatten (18) der Antriebsfläche (10) angeordnet ist und/oder dass die wenigstens eine Luftaustrittsöffnung (5, 22, 29) zumindest teilweise direkt anströmbar ist.

4. Pharmazeutische Verarbeitungsvorrichtung (1) nach einem der vorangehenden Ansprüche, **dadurch gekennzeichnet, dass** die wenigstens eine Luftaustrittsöffnung (5, 22, 29) zumindest teilweise, insbesondere an wenigstens zwei, an wenigstens drei oder an vier Randabschnitten (27, 28, 41), oder vollständig von der Antriebsfläche (10, 23) eingefasst ist und/oder dass die wenigstens eine Luftaustrittsöffnung (5, 22, 29) in Bezug auf die Hauptströmungsrichtung (7), zumindest teilweise, stromaufwärts und/oder stromabwärts und/oder auf einer Höhe der Antriebsfläche (10, 23) angeordnet ist.

5. Pharmazeutische Verarbeitungsvorrichtung (1) nach einem der vorangehenden Ansprüche, **dadurch gekennzeichnet, dass** die wenigstens eine Luftaustrittsöffnung (5) und wenigstens eine Lufteintrittsöffnung (12) durch wenigstens eine Verbindungsgerade verbindbar sind, die durch die Antriebsfläche (10, 23) verläuft.

6. Pharmazeutische Verarbeitungsvorrichtung (1) nach einem der vorangehenden Ansprüche, **dadurch gekennzeichnet, dass** die wenigstens eine Luftaustrittsöffnung(5, 22, 29) über zwei Strömungswege (31, 32), die zwischen sich die Antriebsfläche (10, 23) aufnehmen und/oder beidseits der Antriebsfläche (10, 23) verlaufen, mit der wenigstens einen Lufteintrittsöffnung (12) verbunden ist, insbesondere wobei die zwei Strömungswege (31, 32) einen gemeinsamen Startpunkt (33) und/oder einen gemeinsamen Endpunkt (34) aufweisen oder die zwei Strömungswege (31, 32) beabstandete Startpunkte (33) und/oder beabstandete Endpunkte (34) aufweisen, und/oder dass alle Strömungswege (31, 32) zwischen der wenigstens einen Lufteintrittsöffnung (12) und der wenigstens einen Luftaustrittsöffnung (5, 22, 29) an einer seitlichen Begrenzung der Antriebsfläche (10, 23) an dieser vorbeilaufen.

7. Pharmazeutische Verarbeitungsvorrichtung (1) nach einem der vorangehenden Ansprüche, **dadurch gekennzeichnet, dass** wenigstens ein Strömungsweg(31, 32) nach einem Verlassen der Luftaustrittsöffnung(5, 22 29), insbesondere eines der Luftaustrittsöffnung (5, 22, 29) zugeordneten Schwebstofffilters (39), ein mit der wenigstens einen Transporteinheit (4) transportierbares Transportgut (26), trifft, insbesondere ohne vorher eine andere Oberfläche zu treffen.

8. Pharmazeutische Verarbeitungsvorrichtung (1), insbesondere nach dem Oberbegriff von Anspruch 1 oder nach einem der vorangehenden Ansprüche, mit einer kontrollierten Umgebung (2), in der wenigstens eine Transportvorrichtung (3) ausgebildet ist, die wenigstens eine magnetisch angetrieben, vorzugsweise levitiert, bewegliche Transporteinheit (4) hat, **dadurch gekennzeichnet, dass** ein Fördermittel zum Abführen von Wärme von einem Magnetfelderzeuger (46) der Transportvorrichtung (3) ausgebildet ist und/oder dass ein Fördermittel zum Fördern eines Kühlfluids zu einem Magnetfelderzeuger (46) der Transportvorrichtung (4) ausgebildet ist.

9. Pharmazeutische Verarbeitungsvorrichtung (1) nach einem der vorangehenden Ansprüche, **dadurch gekennzeichnet, dass** das Fördermittel wenigstens einen Transportkanal (47) aufweist, der in wenigstens einem Abschnitt (9, 49), insbesondere in zwei voneinander beabstandeten Abschnitten (9,49), durch die oder eine Begrenzungswand (8) der kontrollierten Umgebung geführt ist.

10. Pharmazeutische Verarbeitungsvorrichtung (1) nach einem der vorangehenden Ansprüche, **dadurch gekennzeichnet, dass** die kontrollierte Umgebung (2) durch eine Einhausung (42)definiert ist, die ein Oberteil (43)und ein Unterteil (44) hat, die über eine Schnittstelle (45) miteinander verbunden sind, insbesondere wobei die Antriebsfläche (10, 23) oberhalb der Schnittstelle (45) und/oder die wenigstens eine Luftaustrittsöffnung (5, 22, 29), zumindest teilweise, unterhalb oder auf Höhe der Schnittstelle (45) ausgebildet ist und/oder wobei das Oberteil (43) eine oder die wenigstens eine Lufteintrittsöffnung (12) und/oder die wenigstens eine Luftaustrittsöffnung (5) und/oder das Unterteil (44) einen Boden (11) und/oder die wenigstens eine Luftaustrittsöffnung (5) bildet.

11. Pharmazeutische Verarbeitungsvorrichtung (1) nach einem der vorangehenden Ansprüche, **dadurch gekennzeichnet, dass** die wenigstens eine Transporteinheit (4) zum gleichzeitigen Transport wenigstens zweier oder mehr als zweier pharmazeutischer Behälter, insbesondere in einer Reihenanordnung, eingerichtet ist und/oder dass die Transporteinheit (4) zum Transport des wenigstens einen pharmazeutischen Behälters (25) außerhalb ihrer Grundfläche ausgebildet ist.

12. Pharmazeutische Verarbeitungsvorrichtung (1) nach dem Oberbegriff von Anspruch 1 oder einem der vorangehenden Ansprüche, **dadurch gekennzeichnet, dass** ein Transportweg der wenigstens einen Transporteinheit (4) an der oder einer Antriebsfläche (10, 23) so eingerichtet ist, dass eine Öffnung eines mit der wenigstens einen Transporteinheit(4) transportierten Transportguts (26), insbesondere eines, vorzugsweise pharmazeutischen, Behälters (25), während einem Transport, zumindest teilweise außerhalb der Antriebsfläche (10, 23) bewegt wird, insbesondere vor, während und/oder nach einem Befüllen und/oder einem Verschließen.

13. Pharmazeutische Verarbeitungsvorrichtung (1) nach einem der vorangehenden Ansprüche, **dadurch gekennzeichnet**, ein Transportweg der wenigstens einen Transporteinheit (4)an der oder einer Antriebsfläche (10, 23) so eingerichtet ist, dass eine Strömungslinie nach einem, vorzugsweise allseitigem, Umströmen des oder eines mit der wenigstens einen Transporteinheit (4) transportierten Transportguts (26), insbesondere eines oder des Behälters (35), nicht auf die Antriebsfläche (10, 23) trifft, und/oder dass das oder ein mit der wenigstens einen Transporteinheit (4) transportiertes Transportgut (26), insbesondere ein oder der, vorzugsweise pharmazeutische Behälter (25), unterhalb einer Filterfläche wenigstens einer oder der wenigstens einen Lufteintrittsöffnung (5) bewegbar ist.

14. Pharmazeutische Verarbeitungsvorrichtung (1) nach einem der vorangehenden Ansprüche, **dadurch gekennzeichnet**, ein Transportweg der wenigstens einen Transporteinheit (4) an der oder einer Antriebsfläche (10, 23)so eingerichtet ist, dass der oder ein Behälter (25) nach einem Aufsetzen auf eine Transporteinheit (4), bis zum Verschließen, so transportiert wird, dass eine Behälteröffnung außerhalb der Antriebsfläche (10, 23) gehalten ist, insbesondere mindestens so weit, wie die halbe Größe der Behälteröffnung.

15. Verfahren zum Betrieb einer pharmazeutischen Verarbeitungsvorrichtung (1), insbesondere unter Verwendung einer pharmazeutischen Verarbeitungsvorrichtung (1)nach einem der vorangehenden Ansprüche, wobei wenigstens eine Transporteinheit (4) in einer kontrollierten Umgebung (2) an wenigstens einer Antriebsfläche (10, 23) magnetisch angetrieben, vorzugsweise levitiert, bewegt wird, wobei die wenigstens eine Transporteinheit (4) wenigstens einen pharmazeutischen Behälter (35) transportiert, **dadurch gekennzeichnet, dass** die wenigstens eine Transporteinheit (4) in wenigstens einem Wegabschnitt (51) den wenigstens einen pharmazeutischen Behälter (25) in einem an der Antriebsfläche (10, 23) seitlich vorbeiströmenden Strömungsweg einer Luftströmung (6) transportiert.

16. Verfahren nach dem vorangehenden Anspruch, **dadurch gekennzeichnet, dass** in dem Wegabschnitt (51) eine Bearbeitungsstation, insbesondere eine Befüllstation (52) und/oder eine Verschließstation (53), angefahren wird und/oder dass sich der Wegabschnitt (51) über mehr als eine Hälfte, insbesondere mehr als 2/3 eines gesamten Fahrwegs (54) der beladenen Transporteinheit (4) erstreckt und/oder dass der Wegabschnitt (51) einen Bereitstellungspunkt (55), an dem wenigstens ein leerer, unverschlossener Behälter (25)an die wenigstens eine Transporteinheit (4) übergeben wird, und/oder einen Entnahmepunkt (56), an dem wenigstens ein befüllter, unverschlossener Behälter (25) von der wenigstens einen Transporteinheit (4) entnommen wird, hat, insbesondere wobei der Wegabschnitt (51) den Bereitstellungspunkt (55) mit dem Entnahmepunkt (56) in einem Fertigungsfluss (57) verbindet.

17. Verfahren nach einem der vorangehenden Ansprüche, **dadurch gekennzeichnet, dass** die wenigstens eine Transporteinheit (4) in dem Wegabschnitt (51) längs einer Begrenzung der Antriebsfläche (10, 23) verfahren wird, insbesondere wobei eine Reihenanordnung von wenigstens zwei oder mehr als zwei von der Transporteinheit (4) transportierten Behältern (25) in Fahrtrichtung ausgerichtet wird, und/oder dass in dem Wegabschnitt (51) ein Abstand (58) des wenigstens einen Transportguts (26), insbesondere pharmazeutischen Behälters (25), von einem entlang des Strömungsweges (31, 32) stromabwärtigen Strömungshindernis, insbesondere von der oder einer die wenigstens eine Luftaustrittsöffnung (5, 22, 29) ausbildenden Begrenzungswand (8), ein Vielfaches einer Höhe des wenigstens einen Transportguts (26), pharmazeutischen Behälters (25) über der Antriebsfläche (10, 23) beträgt.
